# EUROPÄISCHE PATENTSCHRIFT

(11) **EP 2 657 664 B1**
(45) Veröffentlichungstag und Bekanntmachung des Hinweises auf die Patenterteilung: **30.05.2018**
(21) Anmeldenummer: 13001447.5
(22) Anmeldetag: 21.03.2013
(51) Int. Cl.: G01F 23/284, G01F 23/00, G01F 23/296, G01F 25/00

(54) **Verfahren zur Bestimmung des Füllstandes eines Mediums und entsprechende Vorrichtung**
Method for determining the fill level of a medium and corresponding apparatus
Procédé de détermination du niveau de remplissage d'un fluide et dispositif correspondant

(30) Priorität: 24.04.2012 DE 102012007979
(43) Veröffentlichungstag der Anmeldung: 30.10.2013
(73) Patentinhaber: Krohne Messtechnik GmbH, 47058 Duisburg (DE)
(72) Erfinder: Gerding, Michael, Dr.-Ing., D - 44805 Bochum (DE); Vogt, Michael, Dr.-Ing., D - 44797 Bochum (DE)
(74) Vertreter: Gesthuysen Patent- und Rechtsanwälte

(56) Entgegenhaltungen:
- EP-A1- 1 431 723
- EP-A1- 2 093 546
- EP-A1- 2 372 318
- EP-A1- 2 418 465
- EP-A2- 2 026 046
- EP-A2- 2 166 320
- DE-A1- 4 308 373
- DE-A1-102010 042 525

## Beschreibung

Die Erfindung betrifft ein Verfahren zur Bestimmung des Füllstandes eines Mediums. Dabei wird mindestens ein Sendesignal ausgesendet und mindestens ein Empfangssignal empfangen. Das Empfangssignal wird zumindest in Hinblick auf die Prozessgröße "Füllstand" ausgewertet.

Wenn davon die Rede ist, dass das Verfahren zur Bestimmung des Füllstandes gedacht ist und dass das empfangene Signal in Hinblick auf den Füllstand ausgewertet wird, dann sind damit auch solche Verfahren gemeint, bei denen der Füllstand nur überwacht wird, bei denen also keine durchgängige Bestimmbarkeit sämtlicher Füllstände vorliegen muss. Genauso umfasst die Auswertung des Füllstandes nicht nur die Anzeige des Füllstandes, es ist damit auch gemeint, dass das Empfangssignal hinsichtlich des Füllstandes verarbeitet wird, also beispielsweise als Strom- oder Spannungssignal einer weiteren Verarbeitung verfügbar gemacht wird. Bei dem Sendesignal und dem Empfangssignal handelt es sich typischerweise um insbesondere elektromagnetische Signale, natürlich sind aber auch andere Signale geeignet, beispielsweise Schallwellen.

Ferner betrifft die Erfindung eine entsprechende Vorrichtung zur Bestimmung des Füllstandes eines Mediums, mit mindestens einer Sendeeinheit zum Aussenden mindestens eines - insbesondere elektromagnetischen - Sendesignals, mit mindestens einer Empfangseinheit zum Empfangen mindestens eines - insbesondere elektromagnetischen - Empfangssignals, und mit mindestens einer Auswerteeinheit zum Auswerten des Empfangssignals.

In der industriellen Messtechnik werden häufig Radarfüllstandmessgeräte eingesetzt, um den Füllstand von Medien wie beispielsweise Flüssigkeiten, Schüttgütern oder auch Schlämmen innerhalb von Behältern wie Tanks, Silos oder Röhren zu bestimmen. Das durch die Messgeräte umgesetzte Laufzeitverfahren baut auf der physikalischen Gesetzmäßigkeit auf, dass die Laufstrecke z. B. eines elektromagnetischen Signals gleich dem Produkt aus Laufzeit und Ausbreitungsgeschwindigkeit ist. Im Fall einer Messung des Füllstands eines Mediums in einem Behälter entspricht die Laufstrecke dem doppelten Abstand zwischen einer das elektromagnetische Signal abstrahlenden und wieder empfangenden Antenne und der Oberfläche des Mediums. Das Nutzechosignal - also das an der Oberfläche des Mediums reflektierte Signal - und dessen Laufzeit werden zumeist anhand der sog. Echofunktion bzw. der digitalisierten Hüllkurve bestimmt. Die Hüllkurve repräsentiert die Amplituden der Echosignale als Funktion des Abstandes "Antenne - Oberfläche des Mediums" oder der Laufzeit des Signals. Der Füllstand lässt sich aus der Differenz zwischen dem bekannten Abstand der Antenne zum Boden des Behälters und dem durch die Messung bestimmten Abstand der Oberfläche des Mediums zur Antenne berechnen. Bei den gesendeten und empfangenen elektromagnetischen Signalen handelt es sich zumeist um Mikrowellenstrahlung. Messungen mittels Ultraschallwellen sind ebenfalls möglich.

In der Praxis besteht das Empfangssignal leider nicht nur aus dem an der Oberfläche des Mediums reflektierten eigentlichen Echosignal, sondern auch aus Störsignalen, die beispielweise aus Mehrfachreflexionen, nach einem teilweisen Eindringen des Signals in ein - insbesondere sehr trockenes und eine kleine elektrische Leitfähigkeit aufweisendes - Medium oder durch Reflexionen an Behälterwänden, Schweißstellen, Absätzen in der Wandung, Rührwerken, Einfüllleitungen oder dergleichen resultieren. Bei Schüttkegeln treten im Allgemeinen diffuse und auch gerichtete Rückstreuungen auf, die sowohl von der Schüttkegeloberfläche als auch aus dem Schüttkegel selbst stammen. Diese Störsignale erschweren die Auswertung des Empfangssignals bzw. können zu Messfehlern führen. Große Schwierigkeiten treten insbesondere bei Medien auf, die eine kleine Dielektrizitätszahl und kleine elektrische Leitfähigkeit aufweisen.

Die Offenlegungsschrift DE 10 2009 055 262 A1 beschreibt ein Verfahren zur Füllstandbestimmung aus Störsignale aufweisenden Empfangssignalen. Dabei werden in einer Einlernphase in Folge von anwendungs- und gerätebezogenen Testsignalen aus zu erwartenden Antwortsignalen Vergleichssignale ermittelt. In einer Betriebsphase werden dann die empfangenen Signale mit den Vergleichssignalen verglichen, und bei einer Abweichung über einen Grenzwert hinaus wird aus den empfangenen Signalen der Füllstand ermittelt. In der Offenlegungsschrift werden auch weitere Verfahren zur Auswertung von solchen störsignalbehafteten Empfangssignalen des Standes der Technik besprochen. Die Offenlegungsschrift EP 2 166 320 A2 beschreibt ein Verfahren zur Bestimmung des Füllstands eines Mediums nach dem Laufzeitverfahren, wobei das Empfangssignal unter Verwendung einer Frequenz als Filtermaß in ein Subsignal gefiltert wird. Der Nachteil des Standes der Technik besteht darin, dass zumeist nur punktuell wirkende und im Allgemeinen aufwändige Verfahren zur Signalauswertung angeben werden.

Der Erfindung liegt daher die Aufgabe zugrunde, ein Verfahren zur Bestimmung des Füllstands eines Mediums vorzuschlagen, das einen generellen und flexiblen Umgang mit Störsignalen in den Empfangssignalen erlaubt.

Die aufgezeigte Aufgabe ist erfindungsgemäß durch das Verfahren nach Anspruch 1 gelöst. Das Empfangssignal setzt sich im Wesentlichen und für eine vereinfachte Betrachtung zusammen aus dem eigentlichen Echosignal des Sendesignals an der Oberfläche des Mediums und aus Störsignalen, die durch andere Reflexionen usw. entstehen. Für die Auswertung wird meist die Information des Empfangssignals reduziert, indem eine Hüllkurve des Empfangssignals gebildet und diese weiterverarbeitet wird. Daher handelt es sich bei der Hüllkurve insbesondere auch um ein aus dem Empfangssignal abgeleitetes Signal (konkret beispielsweise: Hüllkurve der Empfangssignalstärke aufgetragen über der Entfernung/Laufzeit). Im Folgenden bezieht sich daher die Auswertung des Empfangssignals auch jeweils auf die Auswertung der Hüllkurve bzw. allgemein auf die Auswertung von aus dem Empfangssignal abgeleiteten Signalen. Dabei wird je nach Ausgestaltung das Empfangssignal in Teilschritten der Auswertung bzw. der Verarbeitung mehrfach bearbeitet bzw. es werden mehrere daraus abgeleitete Signale erzeugt.

Der Erfindung liegt die Erkenntnis zugrunde, dass das Empfangssignal sich aus mehreren kohärent überlagerten rückgestreuten Teilsignalen zusammensetzt, die jeweils unterschiedliche Signaleigenschaften aufweisen können. Damit geht einher, dass das Empfangssignal quasi Abschnitte oder Komponenten mit unterschiedlichen Eigenschaften aufweist, in denen sich ggf. unterschiedliche Teilsignale überlagern, verstärken, abschwächen oder sich gegenseitig verrauschen. So stammen beispielsweise Teilsignale aus unterschiedlichen Raumbereichen, wenn einzelne Signale aus der Reflexion an der Oberfläche des Mediums und andere Signale von Reflexionen an Behälterwänden stammen. Weiterhin können sich einzelne Signale in ihrer Laufzeit unterscheiden. Dies ist erkennbar, wenn direkt an der Oberfläche des Mediums reflektierte Signale mit mehrfach reflektierten Signalen verglichen werden. Weiterhin können je nach der reflektierenden Oberfläche auch Beeinflussungen der Polarisation auftreten, so dass sich die Teilsignale in ihrer Polarisation unterscheiden. Es gibt insgesamt eine Vielzahl von Eigenschaften, in denen sich die Teilsignale im Empfangssignal voneinander unterscheiden und wodurch sie sich erfindungsgemäß auch wieder voneinander trennen - und ggf. selektiv auswerten - lassen; dadurch wird eine Diversität an Informationen erhalten.

In dem erfindungsgemäßen Verfahren wird das Aussenden des Sendesignals, das Empfangen des Empfangssignals und/oder die Auswertung des Empfangssignals derartig vorgenommen, dass das Empfangssignal in wenigstens eine Untergruppe in Bezug auf die Signaleigenschaften unterteilt wird, indem es also in mehrere Subsignale gefiltert wird. Dabei geschieht dies einzeln beim Aussenden, Empfangen oder Auswerten oder es werden passende Kombinationen vorgenommen, um den gewünschten Effekt zu erzielen. Im erfindungsgemäßen Verfahren wird die Vielfalt der zum Empfangssignal beitragenden Komponenten durch ihre jeweiligen Eigenschaften geordnet, um so die gefilterten Subsignale der Untergruppen zu erhalten. Die Subsignale erlauben vorzugsweise aufgrund ihrer spezifischen Abhängigkeiten von der Art der sie erzeugenden Reflexion(en)/Streuung(en) eine leichtere (Teil-)Auswertung des Empfangssignals.

In einer Ausgestaltung handelt es sich bei den unterschiedlichen Auswertekriterien neben der Frequenz um eine Polarisation und/oder einen Raumwinkel und/oder eine Signalform und/oder einen Signalempfangszeitpunkt. Die Eigenschaften des Empfangssignals sind dabei insbesondere auch Frequenz, Polarisation, Laufzeit (also insbesondere die Zeit zwischen dem Ausstrahlen des Sendesignals und dem Eintreffen des Empfangssignals beim Empfänger) oder der Raumwinkel, aus dem das Empfangssignal stammt.

Die folgenden Ausgestaltungen beziehen sich insbesondere auf die Art der Auswertung des Empfangssignals. In einer Ausgestaltung ist vorgesehen, dass das Empfangssignal und/oder eine aus dem Empfangssignal gebildete Hüllkurve und/oder das aus dem Empfangssignal abgeleitete Signal mindestens mit dem Auswertekriterium Frequenz oder Polarisation oder Raumwinkel oder Signalempfangszeitpunkt als Filtermaß in mindestens ein Subsignal gefiltert werden/wird. Das vom Empfangssignal abhängige bzw. davon für die weitere Verarbeitung und/oder Auswertung abgeleitete Signal ist dabei insbesondere aus dem Empfangssignal durch die Anwendung einer Fourier-Transformation oder einer inversen Fourier-Transformation entstanden. Die Fourier-Transformation oder die inverse Fourier-Transformation finden in weiteren Ausgestaltungen ggf. mehrfach Anwendung bei der Filterung bzw. Weiterverarbeitung der jeweiligen Subsignale oder der jeweils davon abgeleiteten Signale.

In einer Ausgestaltung wird das Empfangssignal bzw. ein davon abhängiges Signal (wozu auch die Hüllkurve zu zählen ist) mehreren Filtern unterzogen, zwischen denen ggf. weitere unterschiedliche Verarbeitungsschritte wie besagte Fourier-Transformation angewendet werden. Die Auswertekriterien sind dabei beispielsweise Frequenz, Polarisation, Raumwinkel oder Laufzeit. Wird beispielsweise das Empfangssignal nach der Frequenz bzw. innerhalb von Frequenzbereichen - Frequenzbänder und Subfrequenzbänder - gefiltert, so ergeben sich Subsignale, die innerhalb der vorgegebenen Frequenzen liegen. Entsprechendes gilt für Subsignale bezogen auf die Polarisation oder den Raumwinkel. Bei der Betrachtung des Raumwinkels ist dabei ggf. in Abhängigkeit vom Anwendungsfall zu bedenken, dass der Füllstand des Mediums Unebenheiten, z. B. Schüttkegel aufweisen kann, so dass die von der Oberfläche reflektierten Signale nicht nur aus einem Raumbereich oder aus einer Richtung stammen.

Die folgenden Ausgestaltungen beziehen sich auf den Umgang mit den gefilterten Signalen als Subsignale des Empfangssignals. Erfindungsgemäß wird das Empfangssignal bzw. ein davon abhängiges und daraus erzeugtes Signal in Subsignale gemäß den Filtern unterteilt, und aus den Subsignalen werden jeweils Informationen extrahiert. Die Subsignale sind dabei in einer Ausgestaltung disjunkt und überlappen sich teilweise in einer anderen Ausgestaltung. Für die Filterung können sich überlappenden Frequenzbänder verwendet werden. Als Informationen werden beispielsweise Signalmaxima, deren Lage und Amplitude oder auch deren Form in den Subsignalen ermittelt. Weitere Parameter, die aus den Subsignalen gewonnen und für die Identifizierung bzw. Klassifizierung Verwendung finden können, sind beispielsweise Signal-Energie, -Leistung oder -Amplitude usw. Diese Parameter lassen sich beispielsweise aus den abgetasteten Signalen, einer Hüllkurvendetektion oder einer Maximumsuche berechnen. Eine Auswertung besteht beispielsweise darin, dass eine Schwellwertdetektion auf die Subsignale angewendet wird. Weiterhin erlauben diese Parameter auch eine Anwendung als Maß für die Wahrscheinlichkeit der Zuverlässigkeit der Identifizierung. Zusätzlich können die aus einem Subsignal gewonnenen Parameter dafür verwendet werden, dass ein anderes Subsignal beispielsweise besser, schneller oder einfacher ausgewertet wird.

In einer Ausgestaltung werden die Subsignale mit bekannten und passend hinterlegten Vergleichssignalen verglichen. Die Subsignale unterliegen je nach Ausgestaltung weiteren Filterungen mit dem jeweils gleichen Auswertekriterium, aber mit anderen Grenzen oder Parametern, oder mit anderen Auswertekriterien. Die Art der Filterung bzw. Weiterverarbeitung kann dabei generell fest vorgegeben sein oder in Abhängigkeit z. B. von der Signalqualität oder der Art der auftretenden Signale bedarfsgerecht angepasst werden. Die Informationen der Subsignale als Untersysteme des Empfangssignals werden passend kombiniert oder miteinander abgeglichen, um eine Gesamtaussage über die Prozessgröße zu erhalten. Ggf. dienen die extrahierten Informationen auch für die optimal angepasste Weiterverarbeitung der Subsignale bzw. des Empfangssignals.

Alternativ werden die Informationen dafür verwendet, um in folgenden Messungen das Senden des Sendesignals oder das Empfangen des Empfangssignals besser auf die Gegebenheiten anzupassen. Weiterhin lassen sich bei der Auswertung Plausibilitätsbetrachtungen realisieren oder die Informationen von einem Subsignal dienen dazu, die Auswertung eines anderen Subsignals eindeutig zu machen. Dabei stammen die Informationen je nach Ausgestaltung von Subsignalen, die über die gleiche Filterung in Bezug auf das Auswertekriterium (z. B. Frequenz, Polarisation, Raumwinkel, Zeitbereich), jedoch mit unterschiedlichen Parametergrößen (unterschiedliche Frequenzbereiche; horizontale oder vertikale Polarisation; Raumwinkel direkt in Richtung des Mediums oder mit seitlicher Neigung; Zeiten zwischen Null und einem maximal zu erwartenden Zeitpunkt oder Zeiten, die deutlich darüber hinausgehen) erzeugt worden sind, oder von Subsignalen als Folge der Filterungen mit unterschiedlichen Auswertekriterien. Der Vorteil besteht in der Unterteilung in Subsignale, die sich ggf. leichter auswerten lassen und die ggf. jeweils spezifische Informationen liefern, die im Empfangssignal aufgrund der Überlagerung schwerer zugänglich oder gar verloren sind. Ein weiterer Vorteil ergibt sich dadurch, dass so auch anspruchsvollere Auswertungen von komplizierteren Oberflächenstrukturen leicht realisierbar sind. Mithin werden so auch dreidimensionale Oberflächenvermessungen unternommen.

Die Informationen aus dem Subsignal werden erfindungsgemäß dadurch gewonnen, dass in dem Subsignal mindestens ein Teilsignal identifiziert wird. Ein Teilsignal ist dabei insbesondere ein Signalpeak der Amplitude, der sich von den umgebenden Signalen unterscheidet. Im einfachsten Fall wird daher eine Erkennung des größten Signals für diese Teilsignalidentifizierung verwendet. Das Teilsignal kann dabei das eigentliche Nutzecho von der Oberfläche des Mediums sein, es kann sich jedoch auch um ein Störsignal handeln. Im vorliegenden Fall der Bestimmung bzw. Überwachung des Füllstands als Prozessgröße mittels des Laufzeitverfahrens wird im Allgemeinen das Auftreten eines solchen Teilsignals, das sich insbesondere durch seine Form oder seine Lage auszeichnet, mit einer Reflexion assoziiert. Bei anderen Methoden (zur Bestimmung ggf. auch anderer Prozessgrößen) ergeben sich diese Teilsignale folglich aufgrund anderer Besonderheiten.

Da die Teilsignale unterschiedliche Bedeutung haben, je nachdem ob es sich um ein Nutzsignal in Bezug auf den Füllstand oder um ein Störsignal handelt, ist erfindungsgemäß vorgesehen, dass das identifizierte Teilsignal einer Klasse von mindestens zwei Signalklassen - insbesondere den Klassen Echosignal (also bei der Prozessgröße Füllstand ein Reflexionssignal von der Oberfläche des Mediums) oder Störsignal - zugeordnet wird. Nach der Identifizierung wird in dieser Ausgestaltung das innerhalb des durch die Filterung aus dem Empfangssignal entstandenen Subsignals gefundene Teilsignal in eine von zwei Signalklassen oder Typen von Teilsignalen eingeordnet. Interessant ist dabei die Unterscheidung zwischen "Echosignal" als dem an der Oberfläche des Mediums reflektierten interessierenden Signal und "Störsignal". Für die Klassifizierung der Subsignale werden ggf. aus den Subsignalen extrahierte Informationen bzw. Parameter verwendet. Dabei werden die Subsignale in einer Betrachtung als Zufallsvariablen betrachtet, die Informationen über die eigentlichen Nutzsignale bzw. Störsignale in sich tragen. Damit ergeben sich beispielsweise statistische Parameter hinsichtlich der Varianzen der Subsignale oder der Korrelationen miteinander. Daher lassen sich auch statistische Methoden heranziehen, um Informationen aus den Subsignalen zu gewinnen bzw. um eine Identifizierung bzw. Klassifizierung zu ermöglichen.

Die Teilsignale werden in der vorherigen Ausgestaltung nach ihrer Identifizierung und insbesondere für die weitere Verwendung der Subsignale bzw. der daraus extrahierten Informationen einer Klassifizierung unterzogen. Dabei bestehen zwei Fehlerquellen. Zum einen ist dies die Identifizierung des Teilsignals und zum anderen dessen Einordnung in eine der mindestens zwei Signalklassen. Bei beiden Schritten können Fehler auftreten bzw. sind beide Aussagen mit einer gewissen Sicherheit oder Unsicherheit verbunden. Daher werden in einer Ausgestaltung bei der Identifizierung und/oder der Klassifizierung jeweils eine Wahrscheinlichkeit für die Zuverlässigkeit der Identifizierung bzw. der Klassifizierung angegeben. Für die Beurteilung der Identifizierung kann beispielsweise das Signal-Rausch-Verhältnis herangezogen werden oder die Nähe zwischen benachbarten Signalen, von denen eines als Teilsignal identifiziert wird. Über diese Angabe der jeweiligen Wahrscheinlichkeit lässt sich in wenigstens einem nachfolgenden Schritt die Zusammenführung der Informationen aus den Subsignalen zu der Gesamtinformation steuern, indem die Informationen ggf. passend gewichtet werden. Um an die Maße für die Wahrscheinlichkeit der Zuverlässigkeit der Klassifizierung zu gelangen, lassen sich beispielsweise Methoden zur multivarianten Merkmalsanalyse in Hinblick auf Ausprägungen der Klassen "Echosignale von der Oberfläche des Mediums" bzw. "Störsignale" im Merkmalsraum heranziehen, so z. B. die Distanzmaße wie beispielsweise Euklidische Distanz oder Mahalanobis-Distanz.

In den folgenden Ausgestaltungen geht es um das Zusammenspiel von Aussendung des Sendesignals, Empfangen des Empfangssignals und Auswertung des Empfangssignals.

In einer Ausgestaltung wird das Empfangssignal mit einstellbaren Empfangseigenschaften empfangen und das Empfangssignal und/oder das abgeleitete Signal wird unter Beachtung der Empfangseigenschaften ausgewertet - insbesondere gefiltert -. In dieser Ausgestaltung wird quasi schon bei dem Empfangen des Empfangssignals ein Vorabfilter vor einer Filterung im Rahmen der Auswertung erzeugt, indem das Empfangssignal mit vorgebbaren bzw. einstellbaren Empfangseigenschaften empfangen wird. Eine Filterung besteht dabei entweder im Dämpfen von Signalbereichen oder im völligen Ausblenden von Abschnitten des Signals. In der Empfangseinheit wird beispielsweise eine bestimmte Polarisation für den Signalempfang eingestellt, so dass bereits bei der Gewinnung des Empfangssignals eine Filterung in Bezug auf die Polarisation erfolgt. Alternativ oder ergänzend wird das Empfangssignal nur über einen einstellbaren Zeitraum empfangen, so dass Signale, die beispielsweise aus Mehrfachreflexionen resultieren, und die daher eine deutliche höhere Laufzeit haben, nicht empfangen und dadurch weggefiltert werden. Weiterhin wird in einer Ausgestaltung die Empfangseinheit insbesondere in Form einer Empfangsantenne derartig ausgerichtet, dass im Wesentlichen nur Signale aus dem zugehörigen Raumbereich empfangen werden. Die Auswertung ist dabei mit der Art des Empfangs gekoppelt, um die Auswertung passend zu gestalten und die Vorfilterung einzubeziehen.

In einer weiteren Ausgestaltung wird das Sendesignal mit einstellbaren Sendesignaleigenschaften ausgesendet und das Empfangssignal und/oder das abgeleitete Signal wird unter Beachtung der Sendesignaleigenschaften ausgewertet - insbesondere gefiltert-. In dieser Ausgestaltung wird das Sendesignal mit vorgebbaren Eigenschaften erzeugt, die dazu führen, dass das Empfangssignal bereits im Vorhinein eine Filterung erfahren hat bzw. dass einige Signale eine unterschiedliche Gewichtung, z. B. eine Dämpfung oder Verstärkung, erfahren. Für die Auswertung wird auf diese Voreinstellung Rücksicht genommen bzw. sie wird in die Filterung und weitere Auswertung einbezogen.

In einer zusätzlichen Ausgestaltung des Verfahrens werden die beiden letzten Ausführungsbeispiele kombiniert, so dass die Aussendung und der Empfang mit jeweils speziellen Eigenschaften erfolgen. In der Auswertung des daraus entstehenden Empfangssignals wird dann auf beide Voreinstellungen Bezug genommen, d. h. das Aussenden des Sendesignals, das Empfangen des Empfangssignals und die Auswertung des Empfangssignals werden miteinander koordiniert. Für die genaue Auswertung bzw. die Einstellung der Sende- und Empfangsparameter wird beispielsweise in einer Ausgestaltung auch auf ein neuronales Netz zurückgegriffen. Für die Gewinnung der Informationen, der Klassifizierung oder Identifizierung lassen sich neben neuronalen Netzen auch numerische Klassifikatoren (z.B. Minimum-Distanz-Klassifikator, Byes-Klassifikator, Maximum-Likelihood-Klassifikator, Nächster-Nachbar-Klassifikator usw.) oder Fuzzy-Klassifikatoren verwenden. Dabei können jeweils vorherbekannte Parameter usw. herangezogen werden oder es wird für die Auswertung, Weiterverarbeitung bzw. Filterung ein Lernprozess durchgeführt, durch den eine selbständige Optimierung der Auswertung und/oder Filterung erfolgt.

Weiterhin wird die zuvor hergeleitete und aufgezeigte Aufgabe in einer weiteren Lehre der Erfindung bei einer eingangs genannten Vorrichtung zur Bestimmung des Füllstands eines Mediums gelöst mit einer Vorrichtung, die mindestens eine Sendeeinheit zum Aussenden mindestens eines - insbesondere elektromagnetischen - Sendesignals, mindestens eine Empfangseinheit zum Empfangen mindestens eines Empfangssignals und mindestens eine Auswerteeinheit zum Auswerten des Empfangssignals aufweist. Dabei sind/ist die Sendeeinheit und/oder die Empfangseinheit und/oder die Auswerteeinheit zur Umsetzung des oben geschilderten Verfahrens nach wenigstens einer der zuvor genannten Ausgestaltungen ausgestaltet.

In einer Ausgestaltung der Vorrichtung ist mindestens eine Steuereinheit vorgesehen, die die Sendeeinheit und/oder die Empfangseinheit und/oder die Auswerteeinheit miteinander koordiniert und ggf. steuernd oder regelnd eingreift.

In einer weiteren Ausgestaltung ist alternativ oder zusätzlich mindestens eine Speichereinheit vorgesehen, in der die Auswerteeinheit - insbesondere in der Auswerteinheit - gewonnene Informationen und/oder Gesamtinformationen als Historiendaten abspeichert. Die Auswerteeinheit verwendet die Historiendaten der Speichereinheit für die Gewinnung der Informationen und/oder der Gesamtinformation. In dieser Ausgestaltung werden hinterlegte Daten für die Auswertung des aktuellen Empfangssignals oder der Hüllkurve oder der durch Filterung entstandenen Subsignale herangezogen. Ist beispielsweise aus einer Messung bekannt, welche Störsignale von welchen bekannten und vorzugsweise fest installierten Störern verursacht werden, so kann damit die Auswertung entsprechend vereinfacht werden, indem beispielsweise diese Störsignale unter Beachtung der Lage im Empfangssignal bzw. der Amplitude ausgeblendet werden. Ist weiterhin beispielsweise die Rate der Änderung des Füllstands bekannt, so kann aufgrund von einer vorhergehenden Identifizierung des E-chosignals von der Oberfläche des Mediums schneller und einfacher auf den nächstfolgenden Wert für dieses Echosignal geschlossen werden.

Im Einzelnen gibt es eine Vielzahl von Möglichkeiten, das erfindungsgemäße Verfahren und die entsprechende erfindungsgemäße Vorrichtung zur Bestimmung des Füllstandes eines Mediums auszugestalten und weiterzubilden. Dazu wird verwiesen einerseits auf die dem Patentanspruch 1 nachgeordneten Patentansprüche bzw. den Patentanspruch 10, andererseits auf die folgende Beschreibung von Ausführungsbeispielen in Verbindung mit der Zeichnung. In der Zeichnung zeigen
- Fig. 1: eine schematische, im Wesentlichen die funktionalen Wirkzusammenhänge verdeutlichende Darstellung einer Füllstandmessung mittels des Laufzeitverfahrens,
- Fig. 2: eine schematische, im Wesentlichen die funktionalen Wirkzusammenhänge verdeutlichende Darstellung einer Messvorrichtung,
- Fig. 3: eine schematische Darstellung eines Empfangssignals mit Hüllkurve einer Messung bei einem Aufbau der Fig. 1 und
- Fig. 4: ein schematischer, die Zusammenhänge verdeutlichender Ablauf eines Verfahrens zur Messung des Füllstands bei einer Anordnung der Fig. 1.

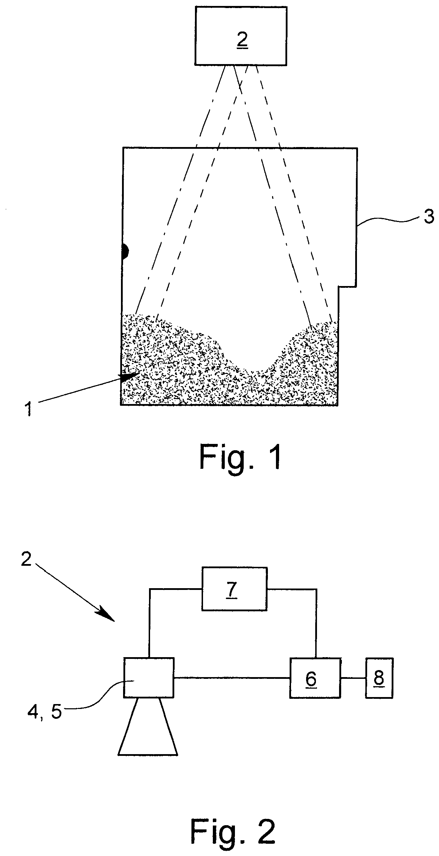

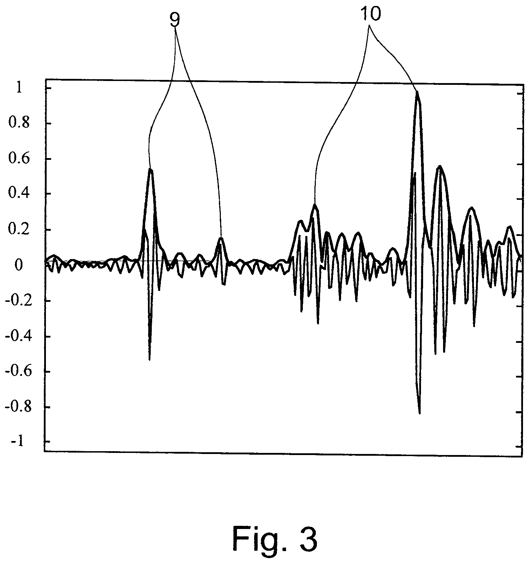

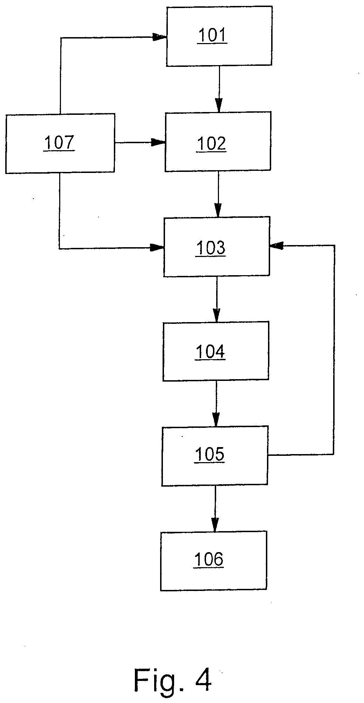

In Fig. 1 ist ein Aufbau zur Füllstandmessung schematisch gezeigt, in der mit einer schematisch in der Fig. 2 dargestellten Messvorrichtung ein wie in der Fig. 3 dargestelltes Empfangssignal gewonnen wird, wobei die Messung dem schematisch in Fig. 4 dargestellten Ablauf entspricht.

Fig. 1 zeigt eine Messanordnung, in der der Füllstand des Mediums 1 durch die Messvorrichtung 2 ermittelt wird. Bei dem Medium 1 handelt es sich um ein Schüttgut, das hier keine ebene Oberfläche, sondern durch Schüttkegel einen welligen Verlauf aufweist. Das Medium 1 befindet sich in einem Behälter 3, der hier an der linken Seite über eine Schweißnaht und an der rechten Seite über einen Absatz verfügt. Tritt das Sendesignal der Messvorrichtung 2 auf diese Störstellen, so ergeben sich dadurch Signale im von der Messvorrichtung 2 empfangenen Empfangssignal, die im schlimmsten Fall dazu führen können, dass sie mit dem Signal von der Oberfläche des Mediums 1 verwechselt werden, so dass ein falscher Wert für den Füllstand berechnet wird.

In der gezeigten Umsetzung muss zudem durch die besondere Oberflächentopologie des Mediums 1 die Auswertung aufwändiger ausgestaltet werden als im Fall einer planen Oberfläche eines Mediums. Bei einem besonders trockenen Medium 1 kann es auch vorkommen, dass die elektromagnetischen Sendesignale zuerst ein wenig eindringen, bevor sie wieder reflektiert werden, so das auch hier unzutreffende Werte für den Füllstand resultieren können. Bei einem wie hier dargestellten teilweise geschlossenen Behälter 3 können Mehrfachreflexionen der Signale auftreten, die dadurch ggf. zwar deutlich später von der Messvorrichtung 2 empfangen werden, die jedoch zur Bestimmung eines viel zu tiefen Füllstands führen könnten.

Bei der Ermittlung des Füllstands wird dabei ausgenutzt, dass die Laufzeit der elektromagnetischen Signale von ihrer - im Allgemeinen bekannten - Ausbreitungsgeschwindigkeit und dem Abstand zwischen Sender und reflektierender Oberfläche des Mediums 1 und zwischen der Oberfläche und dem Empfänger der Signale abhängt. In den meisten Umsetzungsfällen werden Sender und Empfänger durch die gleiche Antenne realisiert. Der Raumwinkel, in den die Signale von der Messvorrichtung 2 ausgestrahlt werden, ist einmal gestrichelt und einmal punkt-gestrichelt angedeutet, wobei dies der Ausgestaltung entspricht, dass eine Sendeeinheit der Messvorrichtung 2 die Abstrahlung des Sendesignals in unterschiedliche Raumbereiche vornimmt.

Fig. 2 zeigt als Blockschaltbild eine Ausgestaltung einer Messvorrichtung 2, die eine gemeinsame Sende- 4 und Empfangseinheit 5 mit einer Hornantenne aufweist. Diese Sende- 4 und Empfangseinheit 5 erzeugt das elektromagnetische Sendesignal und strahlt es ab und empfängt zudem das Empfangssignal. Dabei lassen sich die Parameter für das Senden bzw. Generieren des Sendesignals und die Parameter für das Empfangen des Empfangssignals einzeln und vorzugsweise unabhängig voneinander ändern bzw. einstellen. Die der kombinierten Sende- 4 und Empfangseinheit 5 nachgeordnete Auswerteeinheit 6 wertet das elektromagnetische Empfangssignal aus und ermittelt insbesondere einen Wert für die Prozessgröße Füllstand. Im gezeigten Beispiel ist eine separate Steuereinheit 7 vorgesehen, die die Koordination zwischen Sende- 4, Empfangs- 5 und Auswerteinheit 6 vornimmt und passend aufeinander abstimmt, um jeweils der Filterung des Empfangssignals in die Subsignale bzw. der Verarbeitung der aus den Subsignalen gewonnenen Informationen zu dienen. Die Auswerteeinheit 6 greift für die Verarbeitung der Signale bzw. Informationen auf eine Speichereinheit 8 zurück, in der für Referenz- bzw. Identifizierungszwecke Subsignale von wenigstens einer vorhergehenden Messung hinterlegt sind.

Fig. 3 zeigt einen Ausschnitt eines Empfangssignals mit der zugeordneten Hüllkurve. Aufgetragen sind die einzelnen Amplituden des Empfangssignals über der Laufzeit. Die Hüllkurve oder Einhüllende mit ihrem deutlich ruhigeren Verlauf bedeutet eine Reduktion der Informationen des Empfangssignals, die bei der Bestimmung eines Füllstands anhand des Laufzeitverfahrens im Stand der Technik eine die Auswertung erleichternde Vereinfachung auf die meisten wesentlichen Signale darstellt. Zu erkennen sind in der Einhüllenden vier Teilsignale 9, 10, die sich aufgrund ihrer Amplituden von den übrigen Signalen unterscheiden und dadurch herausragen. Zur Erkennung solcher Teilsignale sind entsprechende Algorithmen im Stand der Technik bekannt. Einfacher lassen sich Teilsignale 9, 10 identifizieren, wenn das Empfangssignal oder dessen Hüllkurve beispielsweise in vier Subsignale anhand der Laufzeiten aufgespalten wird. Dies erlaubt es, in der nach der Erzeugung der Subsignale vorgenommenen Extraktion von Informationen für die Identifizierung der Teilsignale beispielsweise jeweils die gleiche Rechnerroutine laufen zu lassen, die nur ein Maximum ermittelt.

Gemäß der Fig. 1 rühren zwei Reflexionen vom Medium 1 her und zwei Reflexionen sind Störsignale durch Reflexionen an der Schweißstelle bzw. am Absatz der Wandung. Daher muss nach der Identifizierung der Teilsignale 9, 10 für eine Weiterverarbeitung noch eine Klassifizierung der Teilsignale 9, 10 vorgenommen werden. Aus dem Vergleich des Signals der Fig. 3 mit dem Aufbau der Fig. 1 folgt, dass die Störsignale näher in Richtung der Messvorrichtung 2 liegen und dadurch auch eine kürzere Laufzeit haben als die Signale, die durch die Reflexion an der Oberfläche des Mediums 1 entstehen. Daher sind die beiden ersten Teilsignale 9 in der Fig. 3 Störsignale und die beiden anderen Teilsignale 10 stammen von der Oberfläche des Mediums 1. Eine Filterung auf die Nutzechosignale kann damit beispielsweise auch über die Steuerung der Zeit des Empfangens des Empfangssignals erfolgen, indem das Signal erst nach dem Ablauf einer gewissen Zeit registriert wird. In diesem Beispiel wird auch der Vorteil einer Speichereinheit 8 deutlich, der darin besteht, dass hinterlegt werden kann, dass zwei Echosignale von der Oberfläche des Mediums bei dem gegebenen Zustand des Mediums im Empfangssignal erscheinen.

In der Fig. 4 ist ein schematischer Ablauf des erfindungsgemäßen Verfahrens dargestellt. Im Schritt 101 wird mittels einstellbarer Sendesignaleigenschaften als Sendeparameter bzw. als Signalerzeugungsparameter das Sendesignal vorzugsweise in Richtung des Mediums ausgesendet oder ausgestrahlt. Die Parameter der Sendeeigenschaften sind beispielsweise die Frequenz, die Polarisation oder der Raumwinkel, in den das Sendesignal emittiert wird. Danach erfolgt in Wechselwirkung mit dem Medium bzw. mit dessen Umgebung (z. B. Behälterwand oder Einbauten) die Reflexion des Sendesignals in Richtung des Empfängers. Im nächsten Schritt 102 wird mit einstellbaren Empfangseigenschaften das Empfangssignal aufgenommen. Bei diesen Parametern handelt es sich beispielsweise um die Polarisation, ebenfalls um die Frequenz oder um die Laufzeit, bis zu der noch das Empfangssignal empfangen wird. Der Raumwinkel, aus dem das Empfangssignal empfangen wird, lässt sich beispielsweise durch ein Schwenken oder Bewegen einer dem Empfang dienenden Antenne realisieren.

Im Schritt 103, der bereits ein Bestandteil der Auswertung des Empfangssignals ist, wird das Empfangssignal einer Filterung unterzogen, so dass sich wenigstens ein Subsignal ergibt, das im Schritt 104 der Gewinnung wenigstens einer Information oder eines Merkmales bzw. eines Parameters, insbesondere für eine anschließende Identifikation mindestens eines Teilsignals innerhalb des Subsignals dient. Die nachfolgende Identifizierung - insbesondere im Schritt 105 - erfolgt dabei in einer Ausgestaltung mittels der Hilbert-Transformation und einer Betragsbildung als einer Variante der Identifizierung anhand der Amplitude der Hüllkurve. Für eine Frequenzfilterung des Zeitsignals wird zunächst eine Fourier-Transformation des Empfangssignals durchgeführt. Das spektral gefilterte Subsignal wird dann für die Identifizierung wenigstens eines Teilsignals (bzw. eines sich besonders auszeichnenden Peaks) im Schritt 105 einer inversen Fourier-Transformation unterzogen, so dass sich wieder ein Zeitsignal ergibt. Anschließend wird das identifizierte Teilsignal - beispielsweise über eine Varianzanalyse - klassifiziert, d. h. einer von mindestens zwei Klassen zugeordnet. Dabei handelt es sich insbesondere um die beiden Klassen "Echosignale von der Oberfläche des Mediums" und "Störsignale". Bei der Identifizierung und der Klassifizieren wird insbesondere auf die Informationen aus der Auswertung der Subsignale im Schritt 104 zurückgegriffen. Die Klassifizierung erfolgt in einer Ausgestaltung unabhängig von der Identifizierung.

Zwischen den einzelnen Schritten der Auswertung finden - wie oben beschrieben - je nach Art der Filterung bzw. der Art der Weiterverarbeitung bzw. Auswertung ggf. eine Fourier-Transformation und anschließend eine inverse Fourier-Transformation des Subsignals oder ggf. noch weitere Verarbeitungen statt. Die Art der Verarbeitung bzw. der Auswertungsschritte ist dabei ggf. jeweils abhängig von der Art der Filterung, die in Bezug auf das Empfangssignal zur Anwendung gekommen ist. Die Fourier-Transformation findet insbesondere Anwendung nach einer vorhergehenden FrequenzFilterung des Empfangssignals. Alternativ wird durch eine Hilbert-Transformation die Hüllkurve gewonnen. Hinsichtlich der Filterung bezüglich der Polarisation, des Raumwinkels oder der Laufzeit ergeben sich die Subsignale, indem die Empfangssignale mit unterschiedlicher Polarisation herangezogen bzw. durchgeschaltet werden (also ein Gating bezüglich der Polarisation) bzw. indem durch ein Schwenken des Antennenstrahls die Signale aus unterschiedlichen Raumrichtungen gewonnen werden (also ein Gating bezüglich der Raumrichtung) oder indem die Empfangssignale zu unterschiedlichen Messzeitpunkten registriert werden (also ein Gating bezüglich der Empfangszeit im Sinne eines Time-Gating).

Die Ausgabe des Schritts 105 besteht vorzugsweise in als gültig erkannten bzw. detektierten Echosignalinformationen von der Oberfläche des Mediums in Abhängigkeit von der Laufzeit der Signale oder der Entfernung zur Antenne bzw. in als solche erkannten Störsignalinformationen. Im Schritt 105 können für die Identifizierung bzw. Klassifizierung auch aus den als gültig erkannten Signalen die Prozessgrößen wie z. B. der Abstand ermittelt werden. Optional werden ausgehend von bekannten Verhältnissen der Messumgebung, beispielsweise dem bekannten Abstand von Störern, durch Störsignale überlagerte bzw. verfälschte Auswertedaten bzw. Informationen ausgeschlossen oder ausgeblendet. Weiterhin werden in einer Variante für die Auswertung die als gültig erkannten bzw. detektierten Echosignalinformationen von der Oberfläche des Mediums als eine Verteilungsdichte in Abhängigkeit von der Laufzeit der Signale bzw. der Entfernung interpretiert, wobei dann die Auswertung in Hinblick auf die Prozessgröße Füllstand durch statistische Verteilungsparameter erfolgt: so z. B. der Schwerpunkt als Schätzer für den mittleren Abstand zwischen der Antenne und der Oberfläche des Mediums bzw. die empirische Varianz, die Standardabweichung als Schätzer für die Variation des Abstands. Beispielsweise lassen sich auch modellbasierte Schätzungen der Verteilungsdichte oder der daraus abgeleiteten Parameter verwenden.

Der Ablauf von Filterung im Schritt 103, Extrahierung von Informationen bzw. Parametern usw. im Schritt 104 und Identifizierung bzw. Klassifizierung im Schritt 105 wird dabei ggf. mehrmals durchlaufen. Dabei wird teilweise das Empfangssignal mit unterschiedlichen Filtern in Subsignale gefiltert, und teilweise werden die Subsignale zusätzlichen Filterungen oder weiteren Nachbearbeitungen unterzogen.

In einer Variante wird das Empfangssignal zuerst in der Frequenz gefiltert und dann bezogen auf die Polarisationsrichtung. Alternativ und nicht dargestellt erfolgt eine solche Filterung in Bezug auf die Polarisationsrichtung bereits beim Empfangen des Empfangssignals in Schritt 102 und dadurch vor einer Frequenzfilterung.

Im Schritt 106 werden die Einzelinformationen aus den Subsignalen zusammengesetzt, um eine Gesamtinformation über die Prozessgröße Füllstand zu erhalten. Die Schritte 103 bis 105 lassen sich dabei auch als Vorverarbeitung zusammenfassen, wobei die eigentliche Auswertung im Schritt 106 stattfindet. Im Schritt 106 werden für die Auswertung der Informationen aus den Subsignalen vorzugsweise auch die Wahrscheinlichkeiten bei der Identifikation und Klassifikation der Teilsignale verwendet, um zu einer sicheren Aussage über den Füllstand zu gelangen.

Der Schritt 107 erlaubt eine Koordination zwischen dem Senden des Sendesignals im Schritt 101, dem Empfangen des Empfangssignals im Schritt 102 und dem Beginn der Auswertung des Empfangssignals im Schritt 103.

## Patentansprüche

1. Verfahren zur Bestimmung des Füllstands eines Mediums nach dem Laufzeitverfahren, wobei mindestens ein Sendesignal ausgesendet wird, wobei mindestens ein Empfangssignal empfangen wird, und wobei das Empfangssignal zumindest in Hinblick auf den Füllstand ausgewertet wird, wobei das Empfangssignal unter Verwendung unterschiedlicher einstellbarer Auswertekriterien als Filtermaße in mehrere Subsignale gefiltert wird, wobei eine Frequenz ein Auswertekriterium ist, dass jeweils aus den Subsignalen Informationen gewonnen werden, indem in den Subsignalen jeweils mindestens ein Teilsignal identifiziert wird, dass jedes identifizierte Teilsignal einer Klasse von mindestens zwei Signalklassen - insbesondere den Klassen Echosignal und Störsignal - zugeordnet wird und dass die gewonnenen Informationen miteinander kombiniert werden, wobei mindestens eine Gesamtinformation über den Füllstand erzeugt wird.

2. Verfahren nach Anspruch 1, **dadurch gekennzeichnet, dass** es sich bei den unterschiedlichen Auswertekriterien neben der Frequenz um eine Polarisation und/oder einen Raumwinkel und/oder eine Signalform und/oder einen Signalempfangszeitpunkt handelt.

3. Verfahren nach Anspruch 1 oder 2, **dadurch gekennzeichnet, dass** bei der Identifizierung und/oder der Klassifizierung eine Wahrscheinlichkeit für die Zuverlässigkeit der Identifizierung bzw. der Klassifizierung angegeben wird.

4. Verfahren nach einem der Ansprüche 1 bis 3, **dadurch gekennzeichnet, dass** das Empfangssignal mit einstellbaren Empfangseigenschaften empfangen wird, und dass das Empfangssignal unter Beachtung der Empfangseigenschaften ausgewertet - insbesondere gefiltert - wird.

5. Verfahren nach einem der Ansprüche 1 bis 4, **dadurch gekennzeichnet, dass** das Sendesignal mit einstellbaren Sendesignaleigenschaften ausgesendet wird, und dass das Empfangssignal unter Beachtung der Sendesignaleigenschaften ausgewertet - insbesondere gefiltert - wird.

6. Vorrichtung (2) zur Bestimmung und/oder Überwachung des Füllstands eines Mediums (1), mit mindestens einer Sendeeinheit (4) zum Aussenden mindestens eines Sendesignals, mit mindestens einer Empfangseinheit (5) zum Empfangen mindestens eines Empfangssignals, und mit mindestens einer Auswerteeinheit (6) zum Auswerten des Empfangssignals, wobei die Sendeeinheit (4) und die Empfangseinheit (5) und die Auswerteeinheit (6) zur Umsetzung des Verfahrens nach einem der Ansprüche 1 bis 5 ausgestaltet sind.

## Claims

1. Method for determining the fill level of a medium according to the transit time method, wherein at least one transmitting signal is transmitted, wherein at least one receiving signal is received, and wherein the receiving signal is evaluated at least in view of the fill level,
wherein the received signal is filtered into a plurality of sub-signals using different, selectable evaluation criteria as filter measure, wherein one evaluation criterion is a frequency, wherein, in each case, information is obtained from the sub-signals in that, in each case, at least one partial signal is identified in the sub-signals, wherein each identified partial signal is assigned to one of at least two signal classes - in particular the classes echo signal and interfering signal - and wherein the information obtained is combined together, wherein at least one overall piece of information is generated about the level.

2. Method according to claim 1, **characterized in that**, in addition to the frequency, the different evaluation criteria are a polarization and/or a solid angle and/or a signal form and/or a signal reception time.

3. Method according to claim 1 or 2, **characterized in that** a probability for the reliability of the identification or the classification is specified in the identification and/or the classification.

4. Method according to any one of claims 1 to 3, **characterized in that** the received signal is received with adjustable receiving properties, and that the received signal is evaluated in accordance with the reception properties - in particular is filtered.

5. Method according to any one of claims 1 to 4, **characterized in that** the transmission signal is emitted with adjustable transmission signal characteristics, and that the received signal is evaluated in consideration of the transmission signal properties - in particular is filtered.

6. Device (2) for determining and/or monitoring the level of a medium (1), comprising at least one transmitting unit (4) for transmitting at least one transmission signal, at least one receiving unit (5) for receiving at least one received signal, and at least one evaluation unit (6) for evaluating the received signal, wherein the transmitting unit (4) and the receiving unit (5) and the evaluation unit (6) are designed for implementing the method according to any one of claims 1 to 5.

## Revendications

1. Procédé de détermination du niveau de remplissage par un fluide selon le procédé du temps de propagation, au moins un signal d'émission étant émis, au moins un signal de réception étant reçu et le signal de réception étant interprété au moins du point de vue du niveau de remplissage,
le signal de réception étant filtré en plusieurs signaux secondaires en utilisant différents critères d'interprétation réglables en tant que cotes de filtrage, une fréquence étant un critère d'interprétation, des informations étant respectivement obtenues auprès des signaux secondaires en ce qu'au moins un signal partiel est à chaque fois identifié dans les signaux secondaires, chaque signal partiel identifié étant associé à une classe parmi au moins deux classes de signaux, notamment les classes Signal d'écho et Signal parasite, et les informations obtenues étant combinées entre elles, au moins une information globale à propos du niveau de remplissage étant générée.

2. Procédé selon la revendication 1, **caractérisé en ce que** les différents critères d'interprétation, outre la fréquence, sont une polarisation et/ou un angle solide et/ou une forme de signal et/ou un instant de réception de signal.

3. Procédé selon la revendication 1 ou 2, **caractérisé en ce qu'**une probabilité pour la fiabilité de l'identification ou de la classification est indiquée lors de l'identification et/ou de la classification.

4. Procédé selon l'une des revendications 1 à 3, **caractérisé en ce que** le signal de réception est reçu avec des propriétés de réception réglables et **en ce que** le signal de réception est interprété, notamment filtré, en tenant compte des propriétés de réception.

5. Procédé selon l'une des revendications 1 à 4, **caractérisé en ce que** le signal d'émission est émis avec des propriétés de signal d'émission réglables et **en ce que** le signal de réception est interprété, notamment filtré, en tenant compte des propriétés de signal d'émission.

6. Dispositif (2) de détermination et/ou de surveillance du niveau de remplissage par un fluide (1), comprenant au moins une unité d'émission (4) destinée à émettre au moins un signal d'émission, comprenant au moins une unité de réception (5) destinée à recevoir au moins un signal de réception, et comprenant au moins une unité d'interprétation (6) destinée à interpréter le signal de réception, l'unité d'émission (4) et l'unité de réception (5) et l'unité d'interprétation (6) étant configurées pour mettre en oeuvre le procédé selon l'une des revendications 1 à 5.
